# EUROPEAN PATENT APPLICATION

(11) **EP 2 985 655 A1**
(43) Date of publication of application: **17.02.2016**
(21) Application number: 14190990.3
(22) Date of filing: 30.10.2014
(51) Int. Cl.: G02F 1/1337

(54) **Display panel and manufacturing method thereof**

(30) Priority: 15.08.2014 TW 103128043
(71) Applicant: InnoLux Corporation, Chu-Nan, Miao-Li 350 (TW)
(72) Inventor: Tsuei, Bo-Chin, 350 Miao-Li County (TW); Huang, Peng-Cheng, 350 Miao-Li County (TW); Chu, Hsia-Ching, 350 Miao-Li County (TW)
(74) Representative: 2K Patentanwälte Blasberg Kewitz & Reichel

(57) **Abstract**

A display panel (1) is provided. The display panel includes a TFT substrate (100) and a photo-alignment layer (20). The TFT substrate includes a plurality of pixel units (11), wherein each pixel unit includes a plurality of sub-pixels (12). The photo-alignment layer is located on the pixel units, and has at least two different aligning directions corresponding to each sub-pixel. When light passes through each sub-pixel, the display panel (1) shows a dark line pattern (100). The dark line pattern includes a major line (111) and a minor line (112). The major line is located on the boundary between the two different aligning directions in the photo-alignment layer, and extends along a first direction (X), wherein the major line has a major line width (d11). The minor line is connected to the major line, and extends along a second direction (Y), wherein the minor line has a minor line width (d12), and the major line width is greater than the minor line width.

## Description

### CROSS REFERENCE TO RELATED APPLICATIONS

This Application claims priority of Taiwan Patent Application No. 103128043, filed on Aug. 15, 2014, the entirety of which is incorporated by reference herein.

### BACKGROUND OF THE INVENTION

### Field of the Invention

The present invention relates to a display panel, and in particular to a display panel with a photo-alignment layer.

### DESCRIPTION OF THE RELATED ART

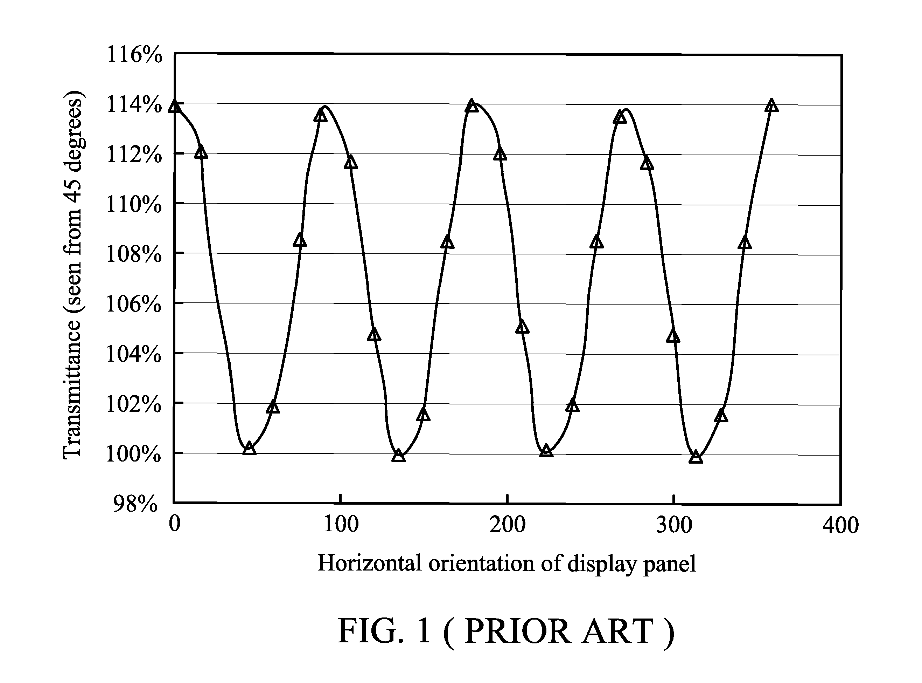

A conventional display panel includes a TFT (thin-film transistor) substrate, a photo-alignment layer and a liquid crystal. In the conventional photo-alignment process, an alignment layer is pre-formed on the TFT substrate, and aligning masks of different aligning directions respectively cover different areas of the alignment layer. In an exposure step, the photo-alignment layer with two different aligning directions is formed on the TFT substrate. When light passes through each sub-pixel of the TFT substrate, the display panel shows a dark line pattern. The area of the dark line pattern is reduced to be as small as possible to improve the aperture opening ratio of the display panel. Along with reducing the area of the dark line pattern, the transmittance variation of the horizontally rotated display panel is increased. With reference to Fig. 1, when the conventional display panel is horizontally rotated and seen from an oblique angle (45 degrees), the transmittance variation of the horizontally rotated display panel is about 14% (from 114% to 100%). The dark-bright variation is noticeable and thus deteriorates from the experience of the user.

### BRIEF SUMMARY OF THE INVENTION

In one embodiment, a display panel is provided. The display panel includes a TFT substrate and a photo-alignment layer. The TFT substrate includes a plurality of pixel units, wherein each pixel unit includes a plurality of sub-pixels. The photo-alignment layer is located on the pixel units, wherein the photo-alignment layer has at least two different aligning directions corresponding to each sub-pixel. When light passes through each sub-pixel, the display panel shows a dark line pattern. The dark line pattern includes a first major line and a first minor line. The first major line is located on the boundary between the two different aligning directions in the photo-alignment layer, and extends along a first direction, wherein a central section of the first major line has a first major line width. The first minor line is connected to the first major line, and extends along a second direction, wherein a central section of the first minor line has a first minor line width, the first direction differs from the second direction, and the first major line width is greater than the first minor line width.

In one embodiment, a method for manufacturing a display panel is provided. First, an alignment layer is formed on the pixel units. Then, a first area of the sub-pixel is covered with a first aligning mask, and an exposure process is performed to form a portion of the photo-alignment layer with a first aligning direction. Next, a second area of the sub-pixel is covered with a second aligning mask, and the exposure process is performed to form another portion of the photo-alignment layer with a second aligning direction, wherein a gap is formed between the first area and the second area.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
Fig. 1 shows the transmittance variation of the horizontally rotated conventional display panel;
Fig. 2A is an enlarged view of the TFT substrate of the embodiment of the invention;
Fig. 2B is a cross sectional view along direction 2B-2B' of Fig. 2A;
Fig. 3A shows a dark line pattern of one embodiment of the invention;
Fig. 3B shows another dark line pattern of one embodiment of the invention;
Fig. 3C shows another dark line pattern of one embodiment of the invention;
Fig. 4 shows the relationship between the ratio (between the major line width and the minor line width) and the front view transmittance, and between the ratio and the oblique view (45 degrees) transmittance variation of the horizontally rotated display panel;
Fig. 5 shows the process of forming the photo-alignment layer on the pixel unit of the embodiment of the invention; and
Fig. 6 shows the brightness distribution along 3B-3B' direction of Figs. 3A to 3C.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

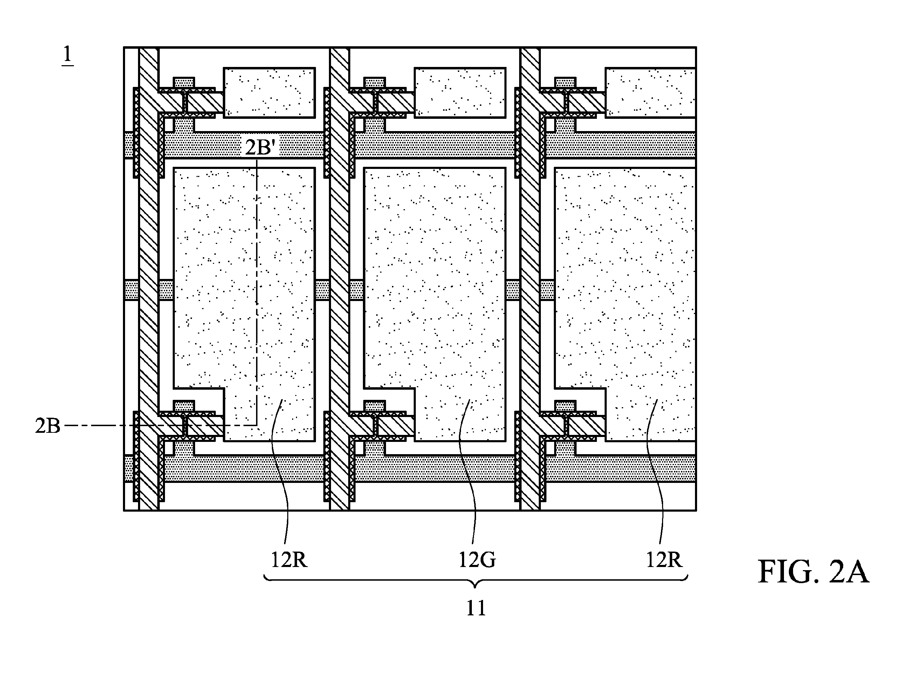

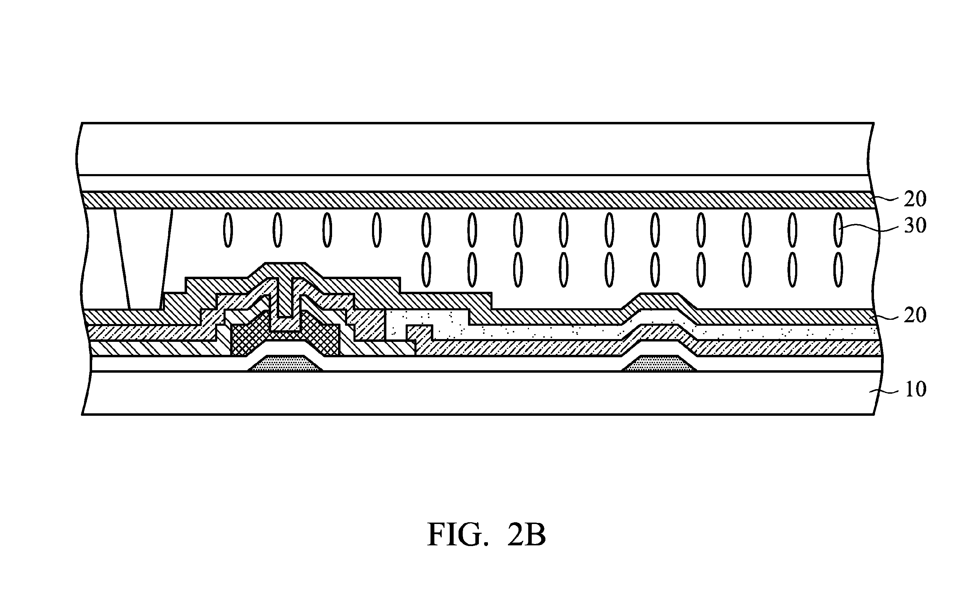

Fig. 2A is an enlarged view of a TFT substrate 10 of a display panel 1 of an embodiment of the invention, and Fig. 2B is a cross sectional view along 2B-2B' direction of Fig. 2A. With reference to Figs. 2A and 2B, the display panel 1 comprises a TFT substrate 10, a photo-alignment layer 20 and a liquid crystal 30. The TFT substrate 10 comprises a plurality of pixel units 11, wherein each pixel unit 11 comprises a plurality of sub-pixels 12. In one embodiment, each pixel unit 11 comprises a red sub-pixel 12(R), a green sub-pixel 12(G) and a blue sub-pixel 12(B). The photo-alignment layer 20 is disposed on the TFT substrate 10 and located on the pixel units 11, wherein the photo-alignment layer 20 has at least two different aligning directions corresponding to each sub-pixel 12. The liquid crystal 30 is located on the photo-alignment layer 20 and has a plurality of the liquid crystal molecules.

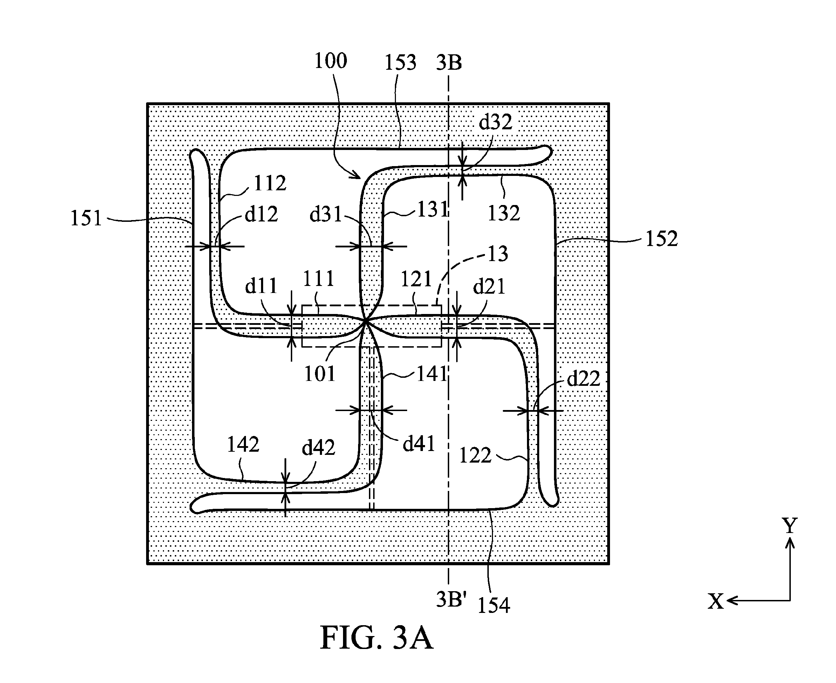

With reference to Figs. 2A, 2B and 3A, in one embodiment, the photo-alignment layer 20 has four different aligning directions corresponding to each sub-pixel 12, and the pre-tilt angle of the photo-alignment layer 20 is between 1.8 and 2.2 degrees. When light passes through each sub-pixel 12, the display panel 1 shows a dark line pattern 100. The dark line pattern 100 comprises a first major line 111 and a first minor line 112. The first major line 111 is located on the boundary between the two different aligning directions in the photo-alignment layer 20, and extends along a first direction X, wherein a central section of the first major line 111 has a first major line width d11. The first minor line 112 is connected to the first major line 111, and extends along a second direction Y, wherein a central section of the first minor line 112 has a first minor line width d12, the first direction X differs from the second direction Y, and the first major line width d11 is greater than the first minor line width d12. In one embodiment, the first minor line 112 is parallel and adjacent to the first border 151 of the sub-pixel 12. In one embodiment, the first direction X is perpendicular to the second direction Y, and the first major line 111 is perpendicular to the first minor line 112.

As shown in Fig. 3A, in one embodiment, each dark line pattern 100 is 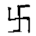 shaped, i.e. fylfot-shaped or swastika (http://zh.wikipedia.org/zh-tw/ 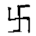 ) . The dark line pattern 100 further comprises a second major line 121, a second minor line 122, a third major line 131, a third minor line 132, a fourth major line 141 and a fourth minor line 142. The shape of the dark line pattern 100 is related to the aligning directions of the photo-alignment layer 20 and the boundary electric field of ITO (indium tin oxide). In one embodiment, the first major line 111, the second major line 121, the third major line 131 and the fourth major line 141 are connected to the center 101 of the sub-pixel 12 (which is also the center of the dark line pattern 100). At the center 101 of the sub-pixel 12, the tilt of the liquid crystal molecules are disorderly, and a bright-dark whirlpool image is generated. Conventionally, a capacitor 13 of the TFT substrate 10 corresponds to the dark line pattern 100 (such as center of the dark line pattern 100), the bright-dark whirlpool image is therefore covered by the capacitor 13, and the aperture opening ratio is maintained.

An end of the second major line 121 connects to the first major line 111 in the center 101 of the sub-pixel 12. The second major line 121 extends along a direction (-X) opposite to the first direction, and a central section of the second major line 121 has a second major line width d21. The second minor line 122 is connected to the other end of the second major line 121, and extends along a direction (-Y) opposite to the second direction, wherein a central section of the second minor line 122 has a second minor line width d22, and the second major line width d21 is greater than the second minor line width d22. In one embodiment, the second minor line 122 is parallel and adjacent to a second border 152 of the sub-pixel 12. The second border 152 is opposite to the first border 151.

An end of the third major line 131 connects the first major line 111, and the second major line 121 in the center 101 of the sub-pixel 12. The third major line 131 extends along the second direction Y, and a central section of the third major line 131 has a third major line width d31. The third minor line 132 is connected to the other end of the third major line 131, and extends along the direction (-X) opposite to the first direction, wherein a central section of the third minor line 132 has a third minor line width d32, and the third major line width d31 is greater than the third minor line width d32. In one embodiment, the third minor line 132 is parallel and adjacent to a third border 153 of the sub-pixel 12. The third border 153 connects the first border 151 to the second border 152.

An end of the fourth major line 141 connects the first major line 111, the second major line 121 and the third major line 131 in the center 101 of the sub-pixel 12. The fourth major line 141 extends along the direction (-Y) opposite to the second direction, and a central section of the fourth major line 141 has a fourth major line width d41. The fourth minor line 142 is connected to the other end of the fourth major line 141, and extends along the first direction X, wherein a central section of the fourth minor line 142 has a fourth minor line width d42, and the fourth major line width d41 is greater than the fourth minor line width d42. In one embodiment, the fourth minor line 142 is parallel and adjacent to a fourth border 154 of the sub-pixel 12. The fourth border 154 is opposite to the third border 153.

In one embodiment, the first major line width d11, the second major line width d21, the third major line width d31 and the fourth major line width d41 are substantially the same. In one embodiment, the first minor line width d12, the second minor line width d22, the third minor line width d32 and the fourth minor line width d42 are substantially the same.

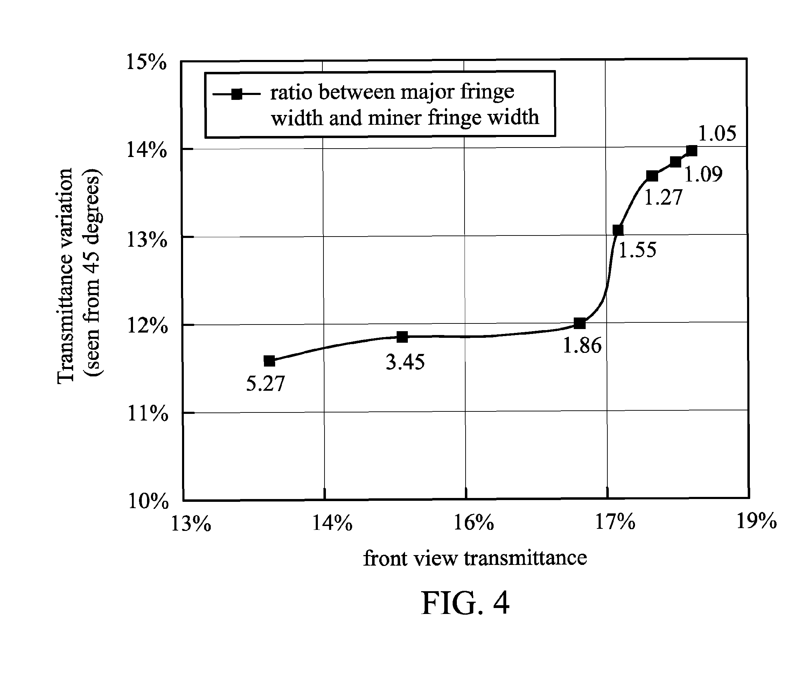

Fig. 4 shows the relationship between the ratio (between the major line width and the minor line width) and the front view transmittance, and between the ratio and the oblique view (45 degrees) transmittance variation of the horizontally rotated display panel. For example, when the ratio between the major line width and the minor line width is 1.55, the transmittance variation of the horizontally rotated display panel is 13%, and the front view transmittance is 17%, wherein ■ labels the ratio between the major line width and the minor line width.

Conventionally, when the ratio between the major line width and the minor line width is close to 1 (for example, 1.05), the transmittance variation of the horizontally rotated display panel is about 14%, and the front view transmittance is 18%. When the ratio between the major line width and the minor line width is increased (from 1 to 2), the transmittance variation of the horizontally rotated display panel is rapidly dropped to 12% from 14%, and the front view transmittance is dropped to 17% from 18%. When the ratio between the major line width and the minor line width is further increased (from 2 to 5.27), the transmittance variation of the horizontally rotated display panel is slowly dropped to 11.5% from 12%, and the front view transmittance is rapidly dropped to 13.5% from 17%.

When the ratio between the major line width and the minor line width is increased, the major line width is far greater than the minor line width, the aperture opening ratio is decreased, and the front view transmittance is decreased. As shown in Fig. 4, when the ratio between the major line width and the minor line width is between 1 and 2, the transmittance variation of the horizontally rotated display panel is effectively improved by slightly sacrificing the front view transmittance. Additionally, when the ratio between the major line width and the minor line width is between 1.4 and 2, the preferred transmittance variation of the horizontally rotated display panel is achieved.

In the embodiment above, by designing the major line width (d11, d21, d31 and d41) of the dark line pattern 100 greater than the minor line width (d12, d22, d32 and d42)of the dark line pattern 100, for example, the ratio between the major line width (d11, d21, d31 and d41) and the minor line width (d12, d22, d32 and d42) being designed between 1 and 2 (preferred between 1.4 and 2), the transmittance variation of the horizontally rotated display panel is effectively improved by slightly sacrificing the front view transmittance.

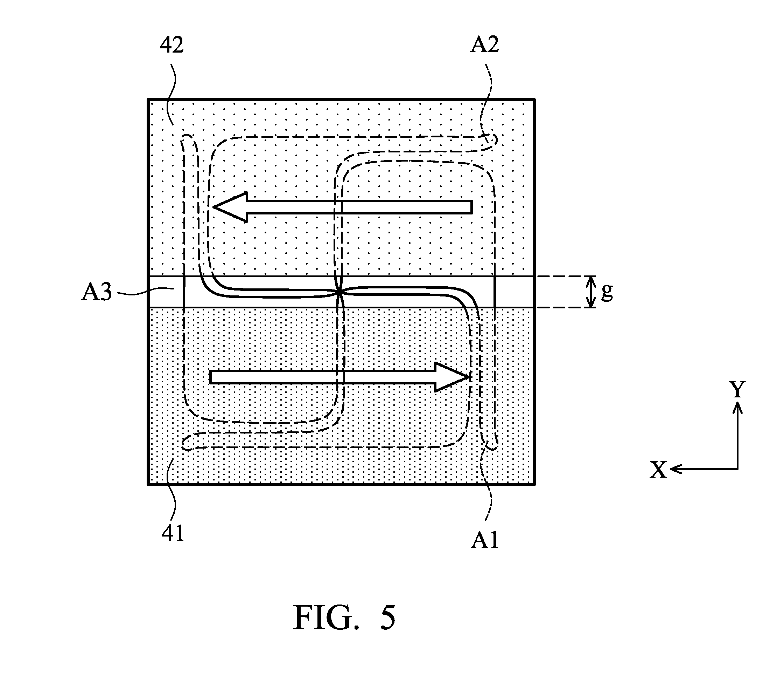

In one embodiment, the dark line pattern can be formed by the following method. In the manufacturing process of the display panel, the photo-alignment layers are respectively formed on the TFT substrate (between the TFT substrate and the liquid crystal) and the color filter (between the color filter and the liquid crystal). In this embodiment, the photo-alignment layer on the TFT substrate is illustrated for example. With reference to Fig. 5, in the manufacturing process of the display panel, the method of forming the photo-alignment layer on the pixel units comprises the following steps. First, an alignment layer is formed on the pixel units. Then, a first area A1(lower area) of the sub-pixel is covered with a first aligning mask 41, and an exposure process is performed on a second area A2 (upper area) and a third area A3(middle area) of the sub-pixel to form a portion of the photo-alignment layer with a first aligning direction X. Next, the second area A2 of the sub-pixel is covered with a second aligning mask 42, and the exposure process is performed on the first area A1 and a third area A3of the sub-pixel to form a portion of the photo-alignment layer with a second aligning direction (-X) opposite to the first aligning direction X. The third area A3 is located between the first area A1 and the second area A2, which is aligned in the above two exposure processes. When the light passes through the third area A3, the major lines are formed. Therefore, the widths of the major lines can be controlled by controlling the gap g between the first area A1 and the second area A2 (by controlling the dimensions of the third area A3).

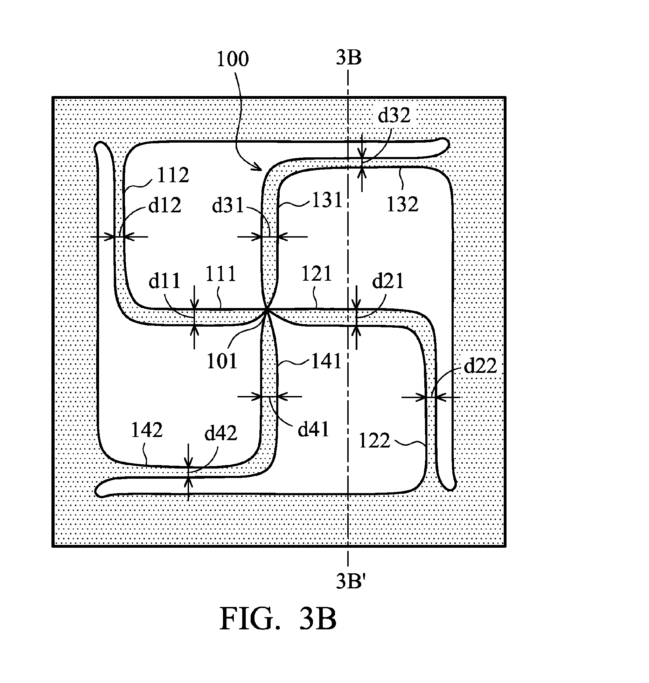

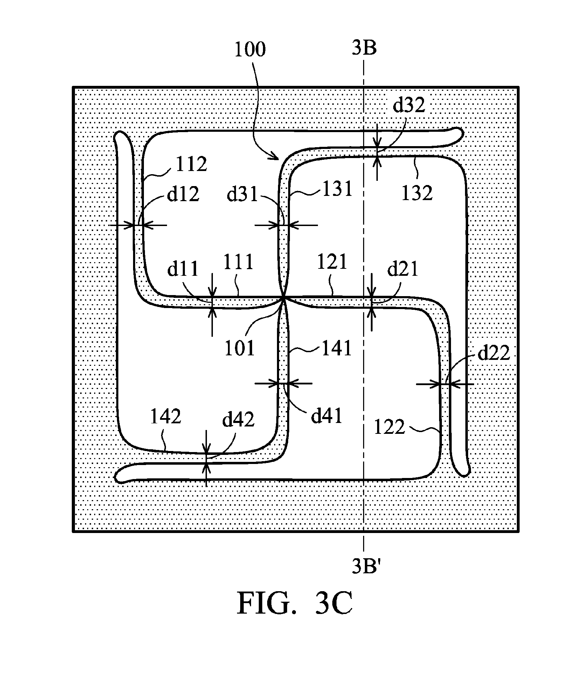

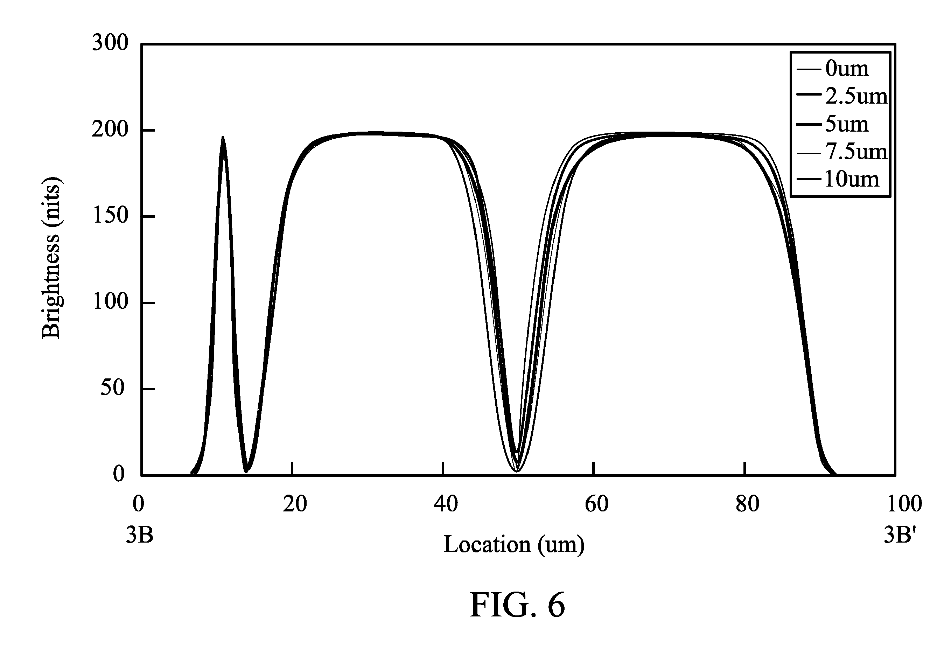

Fig. 6 shows the brightness distribution along the 3B-3B' direction of Figs. 3A to 3C. With reference to Figs. 3A to 3C and 6, when the gap g is changed, the major line width is changed. However, the minor line width is not changed with the gap. The minor line is generated by the opposite directions of the boundary electric field and the liquid crystal alignment, and is not influenced by the gap g. Therefore, the ratio between the major line width and the minor line width is increased with gap g. In one embodiment, with reference to Fig. 3A, when the gap g is 10µm, the ratio between the major line width and the minor line width is 1.87. With reference to Fig. 3B, when the gap g is 7.5µm, the ratio between the major line width and the minor line width is 1.56. With reference to Fig. 3C, when the gap g is 5 µm, the ratio between the major line width and the minor line width is 1.38.

As mentioned above, by maintaining the ratio between the major line width and the minor line width with in the range between 1 and 2 (preferred between 1.4 and 2), the transmittance variation of the horizontally rotated display panel is effectively improved by slightly sacrificing the front view transmittance.

In one embodiment, by controlling the dark lines respectively, the chromaticity of a white light generated by the display panel can be controlled. With reference to Fig. 2B, in one embodiment, each pixel unit 11 comprises a red sub-pixel 12(R), a green sub-pixel 12(G) and a blue sub-pixel 12(B). By adjusting the gap between the first area and the second area, the dark lines generated by the red sub-pixel, the green sub-pixel and the blue sub-pixel are modified (the aperture opening ratio of each sub-pixel is modified), and the chromaticity of the white light generated by the display panel is modified.

Utilizing the embodiments of the invention, the transmittance variation of the horizontally rotated display panel is effectively improved, the loss of the aperture opening ratio is reduced, and the chromaticity of the white light generated by the display panel can be modified without additional processing.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term).
In summary, a display panel 1 is provided. The display panel includes a TFT substrate 100 and a photo-alignment layer 20. The TFT substrate includes a plurality of pixel units 11, wherein each pixel unit includes a plurality of sub-pixels 12. The photo-alignment layer is located on the pixel units, and has at least two different aligning directions corresponding to each sub-pixel. When light passes through each sub-pixel, the display panel 1 shows a dark line pattern 100. The dark line pattern includes a major line 111 and a minor line 112. The major line is located on the boundary between the two different aligning directions in the photo-alignment layer, and extends along a first direction X, wherein the major line has a major line width d11. The minor line is connected to the major line, and extends along a second direction Y, wherein the minor line has a minor line width d12, and the major line width is greater than the minor line width.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A display panel (1), comprising:
a TFT substrate (100), comprising a plurality of pixel units (11), wherein each pixel unit comprises a plurality of sub-pixels (12);
a photo-alignment layer (20), located on the pixel units, wherein the photo-alignment layer has at least two different aligning directions corresponding to each sub-pixel (12),
wherein when light passes through each sub-pixel (12), the display panel (1) shows a dark line pattern (100), and the dark line pattern comprises:
a first major line (111), located on a boundary between the two different aligning directions in the photo-alignment layer, and extending along a first direction (X), wherein a central section of the first major line has a first major line width (d11); and
a first minor line (112), connected to the first major line, and extending along a second direction (Y), wherein a central section of the first minor line has a first minor line width (d12), the first direction differs from the second direction, and the first major line width is greater than the first minor line width.

2. The display panel (1) as claimed in claim 1, wherein a ratio between the first major line width (d11) and the first minor line width (d12) is between 1.4 and 2.

3. The display panel (1) as claimed in claim 1, wherein the major line widths (d11) of the sub-pixels of different colors in each pixel unit are different.

4. The display panel (1) as claimed in claim 1, wherein the first minor line (d12) is parallel and adjacent to a border of the sub-pixel.

5. The display panel (1) as claimed in claim 1, wherein each dark line pattern (100) is 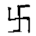 shaped.

6. The display panel (1) as claimed in claim 1, wherein the dark line pattern (100) further comprises:
a second major line (121), located on the boundary between the two different aligning directions in the photo-alignment layer, wherein an end of the second major line connects to the first major line in a center (101) of the dark line pattern, the second major line extends along a direction opposite to the first direction, and a central section of the second major line has a second major line width (d21); and
a second minor line (122), connected to the other end of the second major line, and extending along a direction opposite to the second direction, wherein a central section of the second minor line has a second minor line width (d22), and the second major line width is greater than the second minor line width.

7. The display panel (1) as claimed in claim 6, wherein the dark line pattern (100) further comprises:
a third major line (131), located on the boundary between the two different aligning directions in the photo-alignment layer (20), wherein an end of the third major line connects to the first major line and the second major line in the center (101) of the dark line, the third major line extends along the second direction, and a central section of the third major line has a third major line width (d31); and
a third minor line (132), connected to the other end of the third major line, and extending along the direction opposite to the first direction, wherein a central section of the third minor line has a third minor line width (d32), and the third major line width is greater than the third minor line width.

8. The display panel (1) as claimed in claim 7, wherein the dark line pattern (100) further comprises:
a fourth major line (141), located on the boundary between the two different aligning directions in the photo-alignment layer (20), wherein an end of the fourth major line connects to the first major line, the second major line and the third major line in the center (101) of the dark line, the fourth major line extends along the direction opposite to the second direction, and a central section of the fourth major line has a fourth major line width (d41); and
a fourth minor line (142), connected to the other end of the fourth major line, and extending along the first direction, wherein a central section of the fourth minor line has a fourth minor line width (d42), and the fourth major line width is greater than the fourth minor line width.

9. A method for manufacturing a display panel (1), comprising:
providing a TFT substrate (100), wherein the TFT substrate comprises a plurality of pixel units (11), and each pixel unit comprises a plurality of sub-pixels (12);
forming a photo-alignment layer (20) on the pixel units, wherein the photo-alignment layer has two different aligning directions corresponding to each sub-pixel,
wherein when light passes through each sub-pixel, the display panel (1) shows a dark line pattern (100), and the dark line pattern comprises:
a first major line (111), located on a boundary between the two different aligning directions in the photo-alignment layer (20), and extending along a first direction (X), wherein a central section of the first major line has a first major line width; and
a first minor line (112), connected to the first major line, and extending along a second direction (Y), wherein a central section of the first minor line has a first minor line width, the first direction differs from the second direction, and the first major line width is greater than the first minor line width.

10. The method as claimed in claim 9, wherein the step of forming the photo-alignment layer (20) on the pixel units comprises:
forming an alignment layer on the pixel units;
covering a first area (A1) of the sub-pixel with a first aligning mask, and performing an exposure process to form a portion of the photo-alignment layer (20) with a first aligning direction; and
covering a second area (A2) of the sub-pixel with a second aligning mask, and performing an exposure process to form another portion of the photo-alignment layer with a second aligning direction, wherein a gap (g) is formed between the first area and the second area.

11. The method as claimed in claim 10, wherein the gap (g) is between 0 and 10 µm.

12. The method as claimed in claim 11, wherein the gap (g) is between 5 and 10 µm.

13. The method as claimed in claim 10, wherein the first aligning direction (X) is opposite to the second aligning direction (-X).

14. The method as claimed in claim 10, wherein each pixel unit (11) comprises a red sub-pixel (12R), a green sub-pixel (12G) and a blue sub-pixel (12B), the method further comprising:
adjusting the gap (g) between the first area (A1) and the second area (A2) to modify the dark line patterns (100) generated by the red sub-pixel, the green sub-pixel and the blue sub-pixel to modify a chromaticity of a white light generated by the display panel.

15. The method as claimed in claim 9, wherein a ratio between the first major line width (d11) and the first minor line width (d12) is between 1.4 and 2.
